# EUROPEAN PATENT APPLICATION

(11) **EP 2 446 729 A1**
(43) Date of publication of application: **02.05.2012**
(21) Application number: 10188989.7
(22) Date of filing: 27.10.2010
(51) Int. Cl.: A01D 41/14, A01D 45/02

(54) **A machine for harvesting maize**

(71) Applicant: Olimac S.r.l., 12040 Margarita (CN) (IT)
(72) Inventor: Carboni, Lorenzo, I-12081, Beinette (Cuneo) (IT)
(74) Representative: Marchitelli, Mauro

(57) **Abstract**

A machine for harvesting maize, comprises:
- a transverse structure (12), provided with a worm conveyor (14) including a transverse harvesting channel (16) having a central discharge opening (20) and a shaft (18), which rotates about a transverse axis (A) and is provided with helical surfaces (22), which are designed to convey the product contained in said harvesting channel towards said central discharge opening; and
- a plurality of harvesting units (24), carried by said transverse structure and set at a distance from one another in a transverse direction,
wherein said transverse structure comprises a central frame (28) and two lateral frames (30) carrying respective harvesting units, the lateral frames being mobile between a working position and an inoperative position, wherein the central frame supports in rotation a central shaft section (18C) and the lateral frames support in rotation respective lateral shaft sections (18L), wherein said lateral shaft sections are supported in rotation in cantilever fashion by the respective lateral frames at respective external lateral ends (18L'), and wherein said central shaft section is supported in rotation by said central frame only in one of its central portions (18C') located in front of said central discharge opening.

## Description

### Background of the invention

The present invention relates to a machine for harvesting maize, designed to be applied to the front part of a combine harvester.

### Description of the prior art

Machines for harvesting maize of the most widespread type comprise a supporting structure designed to be fixed to the thresher and carrying a plurality of harvesting units set alongside one another in a transverse direction. Each harvesting unit is dedicated to the harvesting of a row of maize plants.

The transverse structure carries a worm conveyor, including a transverse harvesting channel and a shaft rotating about a transverse axis and provided with helical surfaces which are designed to convey the product contained in the harvesting channel to a central discharge opening facing the inlet mouth of the combine harvester.

In the cases where the combine harvester is designed to move on the road, the machine for harvesting maize can usually assume an extended working position and a folded inoperative position with lower encumbrance in the transverse direction. In these cases, the transverse structure is formed by a fixed central frame and by two lateral frames, which are mobile between a working position and an inoperative position. The central frame supports in rotation a central shaft section, and the lateral frames support in rotation respective lateral shaft sections. In the solutions according to the prior art, the central shaft section is supported in rotation by the central frame by means of two supports set the opposite lateral ends of the central shaft section. Each of the two lateral shaft sections is also supported by the respective lateral frame at its opposite ends.

This mode of supporting the three sections that form the shaft of the worm conveyor means that supporting flanges are necessary set in positions corresponding to the areas of joining between the different shaft sections.

The flanges, which have the purpose of supporting the respective shaft sections in rotation, partially obstruct the harvesting channel of the worm conveyor. During operation, it frequently happens that leaves, cobs, and pieces of stalks of maize plants get jammed in the supports of the shaft. When this happens, it is frequently necessary for the operator to stop the machine so as to unclog the supports of the worm conveyor.

In the prior art, solutions to the problem of obstruction of the harvesting channel of the worm conveyor at the supports of the shaft are currently not available.

### Object and summary of the invention

The object of the present invention is to provide a machine for harvesting maize that will enable the aforesaid problem to be overcome.

According to the present invention, the above object is achieved by a machine for harvesting maize having the characteristics that form the subject of Claim 1.

The claims form an integral part of the teaching provided herein in relation to the invention.

### Brief description of the drawings

The present invention will now be described in detail with reference to the attached drawings, which are provided purely by way of non-limiting example and in which:
- Figure 1 is a perspective view of a machine for harvesting maize according to the present invention in the working position;
- Figure 2 is a perspective view of the machine of Figure 1 in a partially folded position;
- Figure 3 is a perspective view illustrating the machine of Figure 1 in an inoperative position;
- Figure 4 is a perspective view of the transverse structure of the machine of Figure 1 without the harvesting units;
- Figure 5 is a perspective view of the transverse structure of Figure 4 in a partially folded position;
- Figures 6, 7, and 8 are views in detail of the parts indicated by the arrows VI, VII, and VIII in Figure 5; and
- Figure 9 is a cross section according to the line IX-IX of Figure 5.

### Detailed description of one embodiment of the invention

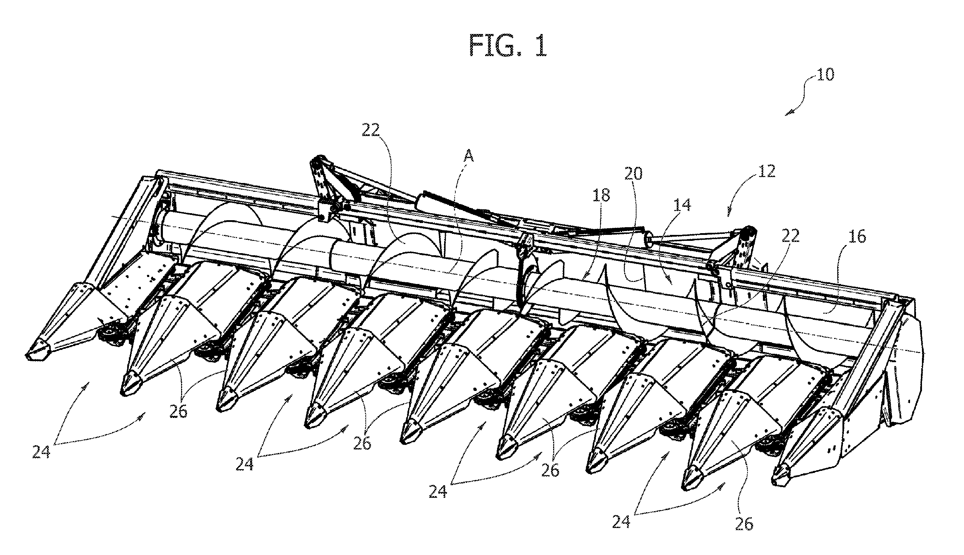

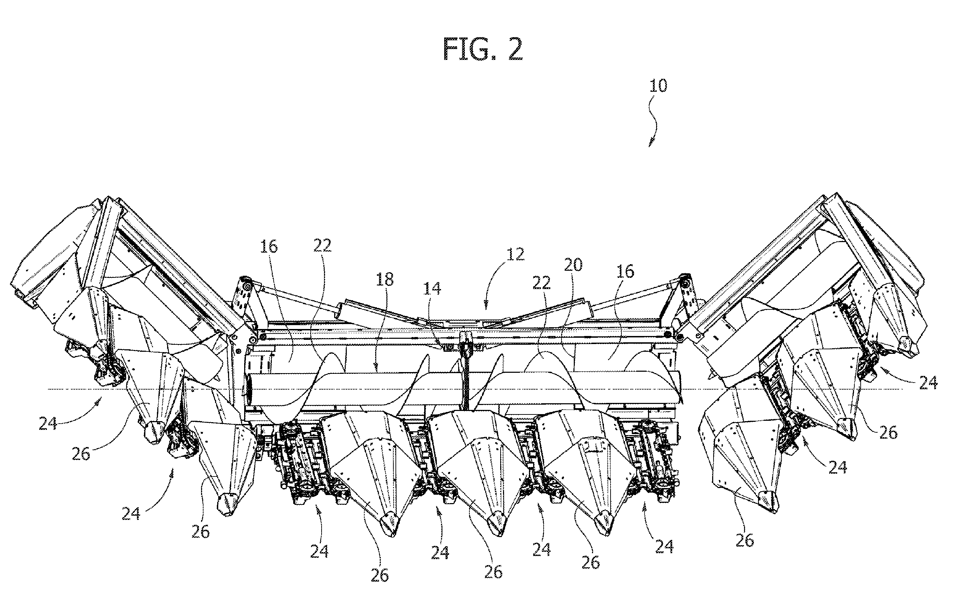

In Figures 1 to 3 designated by 10 is a machine for harvesting maize designed to be applied to the front part of a combine harvester of a conventional type (not illustrated) for harvesting maize. The machine 10 comprises a transverse structure 12, equipped with means (not illustrated) for connection to the combine harvester. The transverse structure 12 has a worm conveyor 14 including a transverse conveying channel 16 and a shaft 18 rotating about a transverse axis A. The transverse structure 12 has a central discharge opening 20, which is open onto the transverse harvesting channel 16 and in use faces an inlet mouth of the combine harvester. The shaft 18 is provided on its outer surface with helical surfaces 22 arranged in such a way as to convey the product contained in the transverse harvesting channel 16 towards the central discharge opening 20. In a known way, the shaft 18 has two helical surfaces 22 with inclination opposite to one another in such a way that the right-hand part of the shaft 18 conveys the product to the left, and the left-hand part of the shaft 18 conveys the product to the right.

The transverse structure 12 carries a plurality of harvesting units 24 set alongside one another in a transverse direction. Separation prongs 26 are arranged between adjacent harvesting units 24. The harvesting units 24 carry out detachment of the cobs from the maize stalks and convey the cobs towards the conveying channel 16. The structure and operation of the harvesting unit 24 are described, for example, in the European patent application No. 09425513 filed in the name of the present applicant.

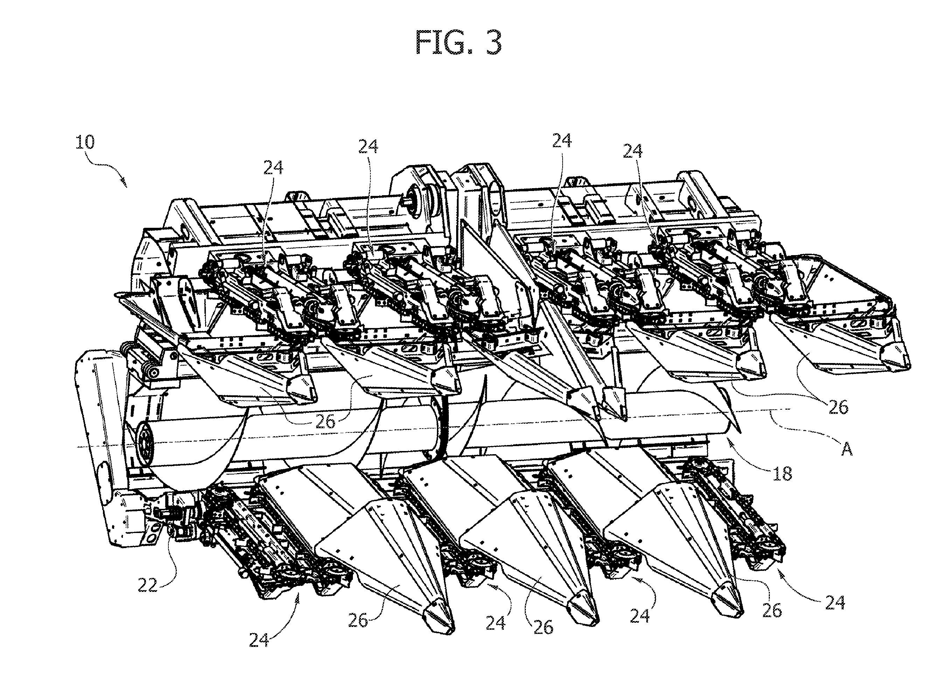

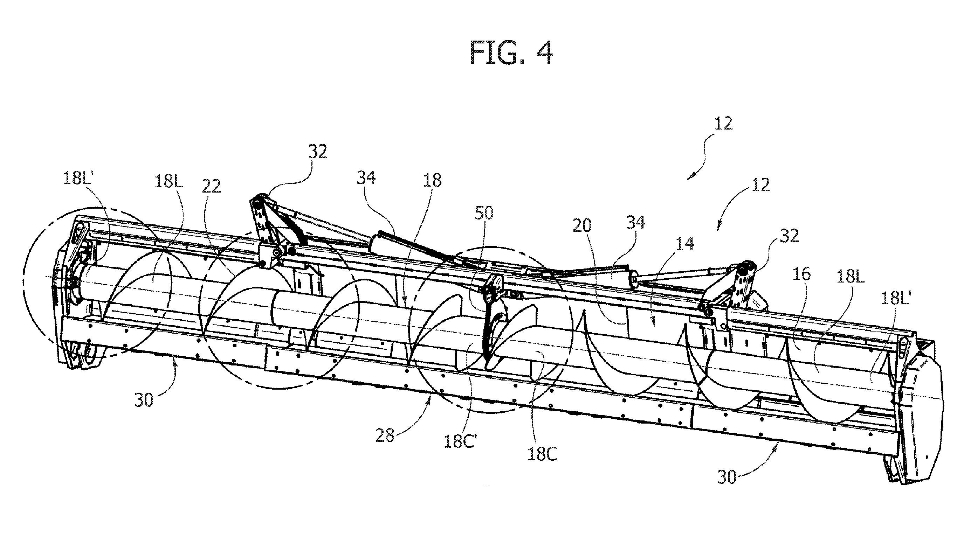

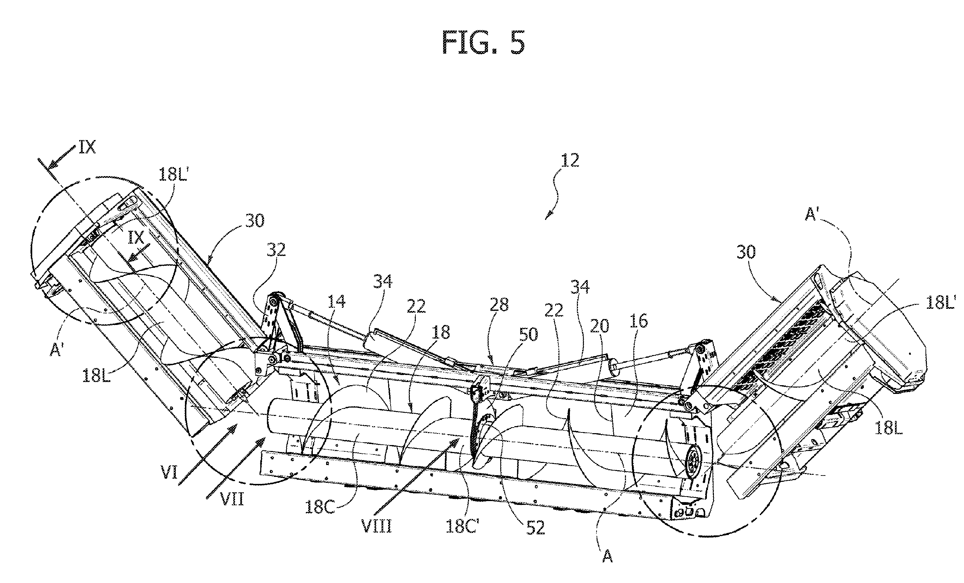

In Figures 4 and 5 the harvesting unit 24 has been removed to illustrate the transverse structure 12 more clearly. With reference to said figures, the transverse structure 12 comprises a central frame 28 and two lateral frames 30, which carry respective harvesting units. The lateral frames 30 are connected to the central frame 28 by means of respective articulation mechanisms 32 controlled by respective cylinders 34. The cylinders 34 and the articulation mechanisms 32 control a movement of the lateral frames 30 between a working position, illustrated in Figures 1 and 4, and an inoperative position, illustrated in Figure 3. In the working position the lateral frames 30 are aligned in the direction transverse to the central frame 28, and in the inoperative position the lateral frames 30 are folded on the central frame 28 so as to reduce the encumbrance in the transverse direction of the machine 10, for example, in order to enable movement of the combine harvester on the road.

The central frame 28 has the central opening 20 and a central section of the conveying channel 16. The lateral frames 30 have respective lateral sections of the conveying channel 16.

The shaft 18 of the worm conveyor 14 is divided into a central section 18C and two lateral sections 18L. The central shaft section 18C is supported in rotation about the transverse axis A by the central frame 28. The lateral shaft sections 18L are supported in rotation by the respective lateral frames 30 about respective axes A' (Figure 5). In the working position the axes of rotation A' of the lateral shaft sections 18L are aligned to the axis of rotation A of the central shaft section 18C. In the inoperative position the lateral shaft sections 18L are substantially parallel and set at a distance in a vertical direction with respect to the central shaft section 18C.

The lateral shaft sections 18L are supported in rotation in cantilever fashion by the respective lateral frames 30 at respective external lateral ends 18L'. The central shaft section 18C is supported in rotation by the central frame 28 only in a central portion 18C' thereof located in front of the central discharge opening 20. In this way, the conveying channel 16 does not encounter any obstacles on which any product or materials moved by the worm conveyor can get jammed. In particular, there is no obstacle along the conveying channel 16 between the lateral ends 18L' of the shaft 18 and the central discharge opening 20. In this way, any interruption of work is prevented, which in machines according to the prior art was necessary to free the worm conveyor from any accumulation of material on the supports of the shaft.

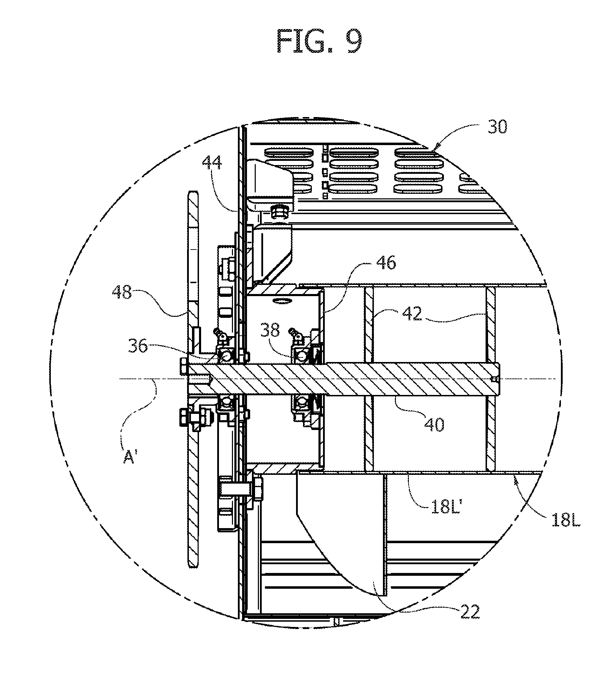

With reference to Figure 9, each lateral shaft section 18L is supported in rotation in cantilever fashion at its external lateral ends 18L' by means of a pair of rolling bearings 36, 38. A pin 40 is fixed within the ends 18L' of the lateral shaft section 18L by means of disks 42 transverse with respect to the axis A'. The pin 40 is supported in rotation by the bearings 36, 38. The first bearing 36 is carried by an external side wall 44 of the lateral frame 30. The second bearing 38 is set at a distance in the direction of the axis A' from the first bearing 36 and is carried by a flange 46 fixed to the external side wall 44. Fixed to one end of the pin 40 is a gear 48, which has the purpose of driving the shaft 18 in rotation by means of a chain transmission.

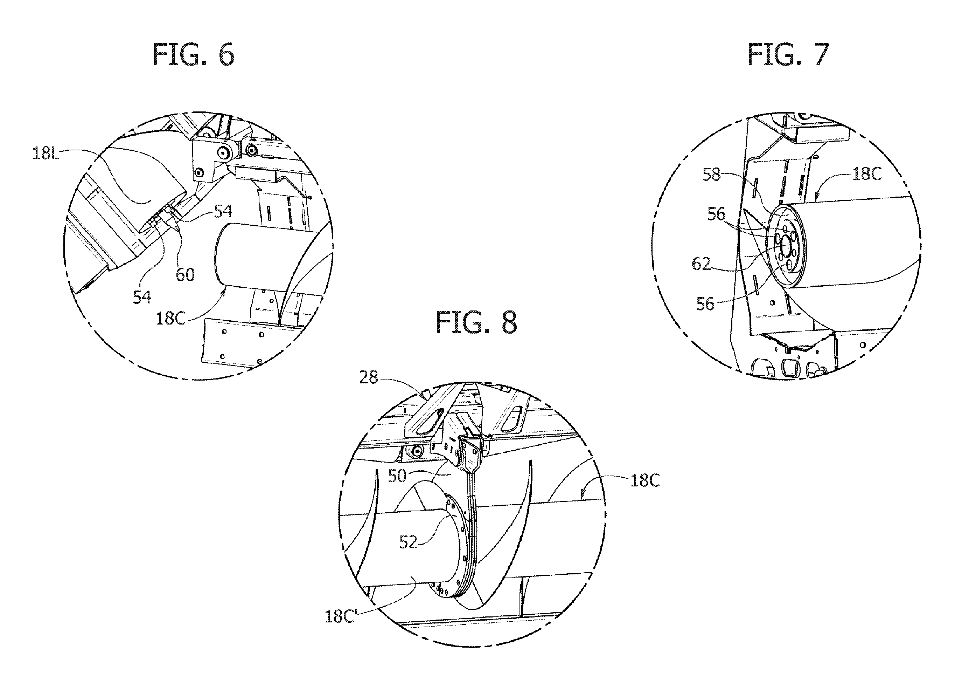

With reference to Figure 8, the central portion 18C' of the central shaft section 18C is supported in rotation by the central frame 28 by means of an external sliding bushing, carried by a flange 50 fixed to the central frame 28. The central portion 18C' of the central shaft section 18C is preferably provided with radial flanges 52, which engage the fixed flange 50 in an axial direction to constrain the central shaft section 18C in an axial direction with respect to the central frame 28.

With reference to Figures 6 and 7, the adjacent ends of the central shaft section 18C and of the corresponding lateral shaft section 18L are provided with a front joint that renders the shaft sections 18C, 18L fixed in rotation with respect to one another in the working position. The front joint comprises, for example, three eccentric pins 54, which are carried by the front end of the lateral shaft section 18L and fit into corresponding holes 56 provided in a disk 58 fixed to the ends of the central shaft section 18C. The front joint moreover comprises a central pin with tapered end 60 that fits into a central hole 62 of the disk 58 during the step of coupling between the ends of the shaft sections 18L and 18C, and that has the purpose of mutual centring and alignment of the shaft sections 18L, 18C.

When the lateral frames 30 are displaced from the inoperative position to the working position, the pins with tapered ends 60 fit into the corresponding holes 62. The eccentric pins 54 are pushed elastically outwards. If the eccentric pins 54 are in phase with the holes 56, the coupling of the two parts by the joint occurs during movement of the mobile frames towards the working position. Otherwise, the eccentric pins 54 engage the corresponding holes 56 when the shaft 18 is driven in rotation.

In the working configuration, the central shaft section 18C and the two lateral shaft sections 18L are fixed with respect to one another in rotation and are supported in rotation only at the external lateral ends 18L' and in the central portion 18C'.

## Claims

1. A machine for harvesting maize, comprising:
- a transverse structure (12), provided with a worm conveyor (14) including a transverse harvesting channel (16) having a central discharge opening (20) and a shaft (18), which rotates about a transverse axis (A) and is provided with helical surfaces (22) which are designed to convey the product contained in said harvesting channel (16) towards said central discharge opening (20); and
- a plurality of harvesting units (24), carried by said transverse structure (12) and set at a distance from one another in a transverse direction,
wherein said transverse structure (12) comprises a central frame (28) and two lateral frames (30) carrying respective harvesting units (24), the lateral frames (30) being mobile between a working position and an inoperative position, wherein the central frame (28) supports in rotation a central shaft section (18C) and the lateral frames (30) support in rotation respective lateral shaft sections (18L), wherein in said working position the central shaft section (18C) and the lateral shaft sections (18L) are aligned with one another along said transverse axis of rotation (A), and wherein in the inoperative position the transverse shaft sections (18L) are substantially parallel and set at a distance vertically with respect to said central shaft section (18C),
said machine being **characterized in that** said lateral shaft sections (18L) are supported in rotation in cantilever fashion by the respective lateral frames (30) at respective external lateral ends (18L'), and **in that** said central shaft section (18C) is supported in rotation by said central frame (28) only in a central portion (18C') thereof situated in front of said central discharge opening (20).

2. The machine according to Claim 1, **characterized in that**, in said working position, said shaft (18) is supported in rotation only at the two opposite lateral ends (18L') and in said central portion (18C').

3. The machine according to Claim 1 or Claim 2, **characterized in that** said external lateral ends (18L') of said lateral shaft sections (18L) are supported in rotation by means of a pair of rolling bearings (36, 38) that rotatably carry a pin (40) fixed within the corresponding external lateral ends (18L').

4. The machine according to any one of the preceding claims, **characterized in that** said central portion (18C') of said central shaft section (18C) is supported in rotation by means of an external sliding bushing carried by a flange (50) fixed to said central frame (28).

5. The machine according to Claim 4, **characterized in that** said central portion (18C') is provided with radial flanges (52), which constrain said central shaft portion (18C) to said supporting flanges (50) in an axial direction.
